# DEMANDE DE BREVET EUROPEEN

(11) **EP 4 391 521 A1**
(43) Date de publication de la demande: **26.06.2024**
(21) Numéro de dépôt: 23216519.1
(22) Date de dépôt: 14.12.2023
(51) Int. Cl.: H04N 5/63, H04N 21/4363, H04N 21/443, H04L 41/0833, H04L 43/0817, H04N 21/4367

(54) **GESTION DE MISE EN VEILLE D'UN TERMINAL LECTEUR DE FLUX MULTIMÉDIA**

(30) Priorité: 19.12.2022 FR 2213829
(71) Demandeur: Orange, 92130 Issy-les-Moulineaux (FR)
(72) Inventeur: MARCHAND, Hervé, 92326 CHÂTILLON CEDEX (FR); RIVOALEN, Mathieu, 92326 CHÂTILLON CEDEX (FR)
(74) Mandataire: Vidon Brevets & Stratégie

(57) **Abrégé**

L'invention concerne un procédé de gestion de mise en veille d'un terminal lecteur de flux multimédia (8, 20), associé à un terminal de restitution de contenu multimédia (5) par une liaison de communication.

Selon l'invention, le terminal lecteur de flux multimédia détecte un état d'un lien entre ledit terminal lecteur de flux multimédia et ledit terminal de restitution sur ladite liaison de communication, et se met en veille en cas de détection d'un état inactif dudit lien.

## Description

### Domaine de l'invention

Le domaine de l'invention est celui des contenus multimédia numériques, à savoir les contenus audio et/ou vidéo numériques, notamment, mais non exclusivement, dans le cadre de l'acheminement de contenus numériques au sein d'un réseau de communication local, tel qu'un réseau domestique. Plus précisément, l'invention concerne l'optimisation des ressources réseau et des ressources énergétiques d'un opérateur de communication et d'un client d'un réseau de communication local, par une gestion améliorée de la mise en veille automatique d'un terminal lecteur de flux multimédia.

### Art antérieur et ses inconvénients

L'accès à un contenu multimédia, tel que la télévision ou la vidéo à la demande, depuis un réseau de type Internet, est possible aujourd'hui, pour la plupart des terminaux de restitution, notamment lorsqu'ils appartiennent à un réseau de communication local, tel qu'un réseau domestique.

Le terminal émet généralement une requête à destination d'un serveur, en indiquant le contenu choisi et il reçoit en retour un flux de données numériques relatives à ce contenu. Dans le cadre d'un réseau de communication local, une telle requête transite par la passerelle d'accès au réseau, par exemple la passerelle résidentielle.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation sur l'écran du terminal.

La diffusion de contenus numériques sur Internet est souvent basée sur des protocoles client-serveur de la famille HTTP (de l'anglais, « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée.

Par exemple, parmi les techniques connues, le téléchargement progressif adaptatif, en anglais HTTP Adaptative Streaming, d'abréviation HAS, permet de diffuser et recevoir des données suivant différentes qualités correspondant par exemple à différents débits.

Il existe plusieurs solutions techniques pour faciliter la distribution d'un tel contenu en streaming, comme par exemple les solutions propriétaires Microsoft^{®} (marque déposée) Smooth Streaming, Apple^{®} HLS, Adobe^{®} HTTP Dynamic Streaming ou encore la norme MPEG-DASH de l'organisme ISO/IEC.

La consommation de contenus numériques en téléchargement progressif adaptatif (HAS) tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande (VOD), la diffusion en différé de programmes télévisuels (Replay), ou encore les offres de type Network PVR (pour « Network Personal Video Recorder », i.e. un service d'enregistrement des contenus numériques, effectué par le fournisseur de contenus lui-même plutôt qu'au domicile de l'utilisateur final).

En outre, d'autres dispositifs tels que des appareils lecteurs de flux multimédia en temps réel accèdent également aux contenus numériques en mode de téléchargement adaptatif progressif pour des contenus télévisuels en temps réel (ou Live). C'est le cas par exemple de l'appareil Chromecast^{®} développé par Google^{®}, ou de la CléTV^{®} d'Orange^{®}. De tels appareils, plus génériquement désignés sous le nom de clef HDMI, peuvent également être utilisés pour accéder à des contenus de type vidéo à la demande.

De tels appareils se branchent classiquement sur le port HDMI d'un téléviseur et communiquent, par connexion Wi-Fi^{®}, avec un autre appareil du réseau de communication domestique connecté à un réseau de communication étendu de type Internet (passerelle résidentielle, ordinateur, téléphone intelligent de type smartphone, tablette...), afin de restituer, sur le téléviseur, le contenu multimédia reçu par une application logicielle compatible. On désignera par la suite ces appareils sous la désignation générique de clef HDMI.

De tels appareils peuvent également être utilisés pour accéder à des contenus de type vidéo à la demande, ou pour restituer sur le téléviseur des contenus personnels stockés dans le réseau domestique, tels qu'une vidéo des dernières vacances ou du dernier événement familial.

Ainsi, de façon générale, dans un environnement domestique, un terminal lecteur de flux multimédia (par exemple une set-top box ou une clef HDMI) télécharge des contenus multimédia depuis une plateforme de distribution de contenus disponible sur le réseau étendu Internet, et les transmet pour restitution à un terminal de restitution de contenu (par exemple un téléviseur ou un PC), auquel il est généralement relié par une liaison d'interface audio/vidéo conforme à la norme HDMI (pour l'anglais « High-Definition Multimedia Interface », en français « interface multimédia haute définition »).

De plus, de nos jours, la plupart des contenus multimédia sont protégés par des droits d'auteur, ce qui nécessite alors la mise en oeuvre de techniques de protection pour leur diffusion ou leur transmission entre terminaux. Un exemple d'une telle technique de protection, dont la mise en oeuvre est de plus en plus souvent exigée par les ayants droit de ces contenus, est le procédé HDCP (pour l'anglais « High-Bandwidth Digital Content Protection », en français « Protection des contenus numériques haute définition »), destiné à contrôler les flux numériques vidéo et audio haute définition. Il exploite principalement les interfaces et liaisons DVI, HDMI ou DisplayPort, et permet de restreindre l'usage des flux protégés, notamment d'en interdire la copie numérique directe vidéo ou audio.

Par exemple, il est possible de monter une session HDCP au niveau du canal HDMI qui relie un téléviseur et un terminal lecteur de flux multimédia, tel qu'une clé HDMI ou un décodeur télévisuel. Une telle session de protection de contenu multimédia permet ainsi d'empêcher la copie des flux multimédia transmis par le canal HDMI sur lequel est montée la session HDCP, et implique le cryptage de ces flux multimédia ainsi que l'échange de clés de sécurité pour leur décryptage. Cette technique de protection des contenus multimédia protégés par droits d'auteur est connue en soi, et ne sera donc pas décrite ici plus en détail.

La problématique de la consommation énergétique des différents équipements d'un réseau domestique fait l'objet d'une prise de conscience de plus en plus aiguë de la part des consommateurs, qui se soucient de réduire leur consommation électrique, à des fins d'économies personnelles d'une part, et de préservation de l'environnement d'autre part.

Or, à ce jour, il existe trois principaux modes de mise en veille des terminaux lecteurs de flux multimédia :
- sur demande explicite de l'utilisateur, par exemple par appui sur un bouton de mise en veille du terminal ou d'un dispositif de télécommande qui lui est associé ;
- sur détection d'inactivité prolongée de l'utilisateur, pour palier un éventuel oubli de mise en veille explicite par l'utilisateur. Par exemple, le fabricant du terminal lecteur de flux multimédia peut prévoir une mise en veille automatique du terminal si, pendant une période d'inactivité dont la durée est généralement fixée à quatre heures environ, l'utilisateur n'a pas interagi avec le terminal, ni appuyé sur un quelconque bouton de la télécommande qui le pilote ;
- par utilisation de la norme HDMI CEC (en anglais, « Consumer Electronics Control », en français « Contrôle de l'électronique utilisateur »), qui permet l'échange de commandes entre équipements compatibles, et notamment la mise en veille automatique du terminal lecteur de flux multimédia quand l'utilisateur éteint le terminal de restitution qui lui est connecté. Ce mode nécessite cependant d'activer explicitement l'option, à la fois côté terminal de restitution et côté terminal lecteur de flux multimédia.

Sur le parc de décodeurs TV gérés par l'opérateur Orange^{®}, on constate qu'un très grand nombre d'utilisateurs éteint son téléviseur mais jamais sa set-top box. Ainsi, après avoir visualisé un contenu (Live, Replay, Vidéo à la demande, ...), l'utilisateur éteint son téléviseur par commande explicite via la télécommande dédiée et la set-top box passe ensuite en veille, par exemple au bout de quatre heures, par détection de non-activité.

Ainsi, l'analyse de données statistiques à la disposition de l'opérateur montre que, dans 30% des cas, les terminaux lecteurs de flux multimédia sont actifs et consomment des contenus vidéo, même quand le téléviseur est éteint.

En effet, le plus souvent, l'alimentation électrique des terminaux type clefs HDMI s'opère par un port micro-USB (pour « Universal Serial Bus », bus série universel), situé par exemple à l'arrière de la clef HDMI, qui se branche à un port USB correspondant du téléviseur ou à une source d'alimentation externe. Dans ce dernier cas, le fonctionnement de tels appareils est donc ininterrompu, dans la mesure où ils ne sont généralement pas équipés d'interrupteurs marche/arrêt. En effet, l'utilisateur va naturellement éteindre ou mettre en veille son téléviseur mais ne vas pas débrancher du secteur sa clef HDMI de manière à, lorsque le téléviseur est de nouveau mis sous tension, accéder au contenu sans délai lié au redémarrage de la clef HDMI. Cette habitude de l'utilisateur de ne pas débrancher sa clef HDMI vaut également pour le décodeur TV, rarement débranché lorsque le téléviseur de l'utilisateur est éteint, et de manière générale pour tout équipement connecté par un canal HDMI à un téléviseur.

Or, les contenus numériques dits « live », i.e. qui correspondent à des programmes télévisuels en temps réel, n'ont, par nature, pas de durée prédéfinie, ou de date de fin. Il en résulte que, si l'utilisateur final ne stoppe pas explicitement la diffusion de ces contenus, par exemple en arrêtant explicitement la diffusion du contenu sur la clef HDMI ou le décodeur (par exemple en revenant sur la page d'accueil) ou en interrompant son alimentation électrique, ils peuvent être joués indéfiniment par la clef HDMI ou le décodeur, qui les reçoit d'un appareil connecté du réseau domestique, et les fournit au téléviseur pour qu'il les restitue et ce, même si ce dernier est éteint et n'affiche donc aucun contenu sur son écran. Il en résulte donc une consommation permanente et inutile des ressources en bande passante, tant au sein du réseau de communication local que du réseau de communication étendu du fournisseur d'accès à Internet, ainsi qu'une consommation électrique inutile.

Ceci peut s'avérer problématique à plusieurs points de vue.

Tout d'abord, l'utilisateur final n'a généralement pas conscience de cette problématique. En effet, le plus souvent, quand il cesse de regarder le programme télévisuel, il éteint ou met en veille son téléviseur, ce qui lui laisse à penser qu'il a ainsi effectivement stoppé la diffusion du contenu qu'il visualisait. Il n'a généralement pas conscience que la clef HDMI ou le décodeur continue à faire l'acquisition de contenus numériques en mode de téléchargement adaptatif progressif. Il peut donc s'étonner que le débit ou la bande passante dans le réseau domestique soient faibles, pour les autres utilisations qu'il souhaite en faire, ce qui est source d'insatisfaction.

En outre, à la différence des contenus de type multicast (par exemple pour la télévision sur IP classique), les contenus diffusés en mode de téléchargement progressif adaptatif HAS sont beaucoup plus consommateurs de ressource réseau pour l'opérateur du réseau de communication étendu. En effet, le flux n'est pas dupliqué au plus près du client, mais multiplié par le nombre de clients qui le consomment. Lorsqu'une multitude de clients utilisent par exemple une telle clef HDMI, qu'ils laissent fonctionner en continu sans nécessité, cette consommation inutile de ressources réseau peut prendre des proportions problématiques pour l'opérateur.

Pour ces deux raisons, il est important, pour le fournisseur d'accès au réseau de communication étendu, de s'assurer que les contenus numériques diffusés le sont à bon escient, et cessent notamment de consommer des ressources réseau et bande passante inutiles, lorsque l'utilisateur final ne souhaite plus les visualiser, par exemple s'il n'est plus présent devant son téléviseur.

Pour résoudre ce problème, on a envisagé de mettre en place la méthode de mise en veille mentionnée ci-avant : sur détection qu'un utilisateur n'a plus interagi avec sa clef HDMI ou son décodeur depuis un certain temps (par exemple quatre heures), une fenêtre pop-up (en français, fenêtre intruse ou fenêtre « surgissante ») est affichée sur l'écran du téléviseur pendant une durée prédéterminée (par exemple soixante secondes). Le message affiché dans cette fenêtre invite l'utilisateur à confirmer sa présence devant l'écran, par exemple en appuyant sur une touche de la télécommande du téléviseur. Si l'utilisateur répond à cette invitation, la diffusion du contenu par la clef HDMI ou le décodeur se poursuit. Dans le cas contraire, à l'issue de la durée prédéterminée d'affichage de la fenêtre pop-up, le flux associé au contenu numérique en direct est brutalement coupé, et la clé HDMI ou le décodeur mis en veille, afin de libérer des ressources réseau.

Cette solution intéressante s'avère cependant radicale et assez brutale. En outre, la consommation des ressources réseau perdure longtemps après que l'utilisateur ait cessé de s'intéresser au contenu diffusé, ce qui n'est pas optimal. On pourrait envisager de réduire la durée de diffusion du contenu avant affichage de la fenêtre pop-up, par exemple à deux heures, mais au détriment éventuel d'une insatisfaction de l'utilisateur, qui pourrait être gêné par l'affichage intempestif de cette fenêtre, au beau milieu de son programme télévisuel.

Il existe donc un besoin d'une technique de mise en veille automatique d'un terminal lecteur de flux multimédia, qui ne présente pas ces différents inconvénients de l'art antérieur. Notamment, il existe un besoin d'une telle technique qui permette une meilleure optimisation de la consommation des ressources réseau et énergétiques, et donc une réduction de la durée précédent l'activation de la mise en veille du terminal.

### Exposé de l'invention

L'invention répond à ce besoin en proposant un procédé de gestion de mise en veille d'un terminal lecteur de flux multimédia, associé à un terminal de restitution de contenu multimédia par une liaison de communication, comprenant des étapes de détection d'un état d'un lien entre le terminal lecteur de flux multimédia et le terminal de restitution sur la liaison de communication, et de mise en veille du terminal lecteur de flux multimédia en cas de détection d'un état inactif du lien.

Ainsi, l'invention repose sur une approche tout à fait nouvelle et inventive de la gestion de la mise en veille d'un terminal lecteur de flux multimédia, par exemple de type clef HDMI ou décodeur TV. En effet, les solutions de l'art antérieur proposent la mise en veille de tels terminaux au bout d'une période relativement longue, généralement de plusieurs heures, par exemple quatre heures, au cours de laquelle aucune interaction de l'utilisateur du contenu avec le terminal de restitution, tel qu'un téléviseur, ou le terminal lecteur de flux multimédia n'a été détectée. Au contraire, la solution de l'invention vise à détecter plus rapidement le besoin de mise en veille du terminal lecteur de flux multimédia, et donc de coupure du téléchargement du flux multimédia, par détection quasiment continue de l'état du lien le reliant au terminal de restitution. Ceci a pour effet de diminuer la consommation en ressources réseau et énergétiques, tant pour l'opérateur du réseau étendu que pour le client du réseau de communication local. Un tel procédé présente ainsi un impact positif sur l'environnement. Il est, de plus, simple à mettre en oeuvre au regard des moyens technologiques actuels.

Ainsi, alors que les techniques de l'art antérieur reposaient principalement sur une observation des interactions de l'utilisateur avec ses équipements, la solution de l'invention repose sur la scrutation de l'état du lien entre le terminal lecteur de flux multimédia et le terminal de restitution, et sur la mise en veille rapide du terminal lecteur de flux multimédia après détection que ce lien n'est plus actif.

Par exemple, selon un mode de réalisation, le lien est détecté comme étant inactif si le lien, par exemple un câble cuivre ou fibre, reliant le terminal lecteur de flux multimédia au terminal de restitution est débranché.

Selon un premier aspect, la détection d'un état d'un lien entre le terminal lecteur de flux multimédia et le terminal de restitution comprend au moins deux interrogations successives de l'état du lien par le terminal lecteur de flux multimédia. Un état inactif du lien est détecté quand le lien est considéré comme inactif en réponse aux deux interrogations minimales successives du terminal lecteur de flux multimédia.

Ainsi, la durée d'activation de la mise en veille du terminal lecteur de flux multimédia est largement diminuée au regard des procédés de mise en veille de l'art antérieur, lesquels proposent de mettre le terminal en veille automatique au bout d'une durée généralement de plusieurs heures. Selon le procédé de l'invention, au contraire, les interrogations de l'état du lien reliant le terminal lecteur de flux multimédia et le terminal de restitution sont espacées de quelques minutes seulement, ce qui s'avère suffisant pour analyser l'état de la liaison entre ces deux terminaux, et en déduire ainsi un éventuel besoin de mise en veille si cet état a été détecté comme inactif.

Cette technique de détection est également avantageusement fiable, puisqu'elle repose sur a minima deux interrogations de l'état du lien, voire davantage, ce qui permet de s'assurer de l'état effectif de ce lien, ou à tout le moins de réduire le pourcentage d'erreur relatif à cette détection.

Selon un autre aspect, le lien entre le terminal lecteur de flux multimédia et le terminal de restitution est une session de protection de contenu multimédia négociée entre les deux terminaux.

Ainsi, lorsque le contenu multimédia échangé entre ces deux terminaux est protégé par des droits d'auteur, la transmission de ce contenu du terminal lecteur de flux multimédia vers le terminal de restitution est sécurisée par cette session de protection, qui permet notamment d'interdire la copie numérique directe vidéo ou audio de ce contenu. Cette technique de protection permet de satisfaire les ayants-droits, qui ainsi ne bloqueront pas l'accès à leur propriété numérique pour les utilisateurs, et permettront au contraire leur partage et leur diffusion.

Dans ce mode de réalisation, l'état du lien est détecté comme inactif si la session HDCP n'est plus établie entre le terminal de restitution et le terminal lecteur de flux multimédia.

Selon un autre aspect, la détection de l'état inactif du lien s'accompagne d'une demande de restitution d'un message d'alerte.

Ainsi, ce message d'alerte permet avantageusement d'apporter une sécurité supplémentaire à la double interrogation de l'état du lien qui relie le terminal lecteur de flux multimédia et le terminal de restitution, pour s'assurer que la mise en veille du terminal lecteur de flux multimédia a bien lieu lorsque l'utilisateur n'a effectivement plus besoin de visualiser le contenu multimédia sur son téléviseur. Par exemple, dans le cas où il n'est plus présent devant son téléviseur, ou s'il interagit avec son téléviseur de telle façon qu'il ne nécessite plus l'affichage du contenu sur son écran.

Ce message d'alerte peut prendre la forme d'une fenêtre pop-up, qui s'affiche sur le téléviseur (ou sur le terminal de commande du terminal lecteur de flux multimédia, par exemple la tablette de l'utilisateur), et qui informe que le terminal se mettra en veille sous peu. L'utilisateur peut alors, d'un simple appui sur une touche de la télécommande du téléviseur ou du terminal, signaler sa présence, et ainsi revenir au mode de gestion initial de téléchargement et de diffusion du contenu multimédia.

Dans le cas où le terminal de restitution a été mis en veille par l'utilisateur, la commande d'affichage du message est envoyée, mais le message n'est pas affiché sur l'écran du terminal de restitution, qui est dans un état de veille.

Selon encore un autre aspect, en l'absence de réponse au message d'alerte dans une plage temporelle donnée, le terminal lecteur de flux multimédia se met en veille.

Ainsi, la mise en veille du terminal est opérée de façon fiable, puisque cette plage temporelle donnée permet de s'assurer de l'absence effective de l'utilisateur, ou à tout le moins de l'inutilité de la transmission du flux multimédia vers le terminal de restitution.

L'invention concerne encore un dispositif de gestion de mise en veille d'un terminal lecteur de flux multimédia, associé à un terminal de restitution de contenu multimédia par une liaison de communication. Un tel dispositif comprend un module de détection d'un état d'un lien entre le terminal lecteur de flux multimédia et le terminal de restitution sur la liaison de communication, et un module de mise en veille du terminal lecteur de flux multimédia.

Selon un aspect, le module de détection comprend des moyens d'émission de commandes pour opérer au moins deux interrogations successives de l'état du lien par le terminal lecteur de flux multimédia. Le module de mise en veille, quant à lui, comprend des moyens d'émission de commandes de mise en veille du terminal lecteur de flux multimédia lorsqu'en réponse aux deux interrogations minimales successives, l'état du lien est détecté comme étant inactif.

Selon un autre aspect, ce dispositif comprend en outre un module d'établissement d'une session de protection de contenu multimédia, comprenant des moyens d'émission de commandes de négociation d'une session de protection de contenu multimédia entre le terminal lecteur de flux multimédia et le terminal de restitution, lorsqu'ils sont actifs.

L'invention concerne également un terminal lecteur de flux, comprenant un dispositif de gestion de mise en veille tel que présenté ci-avant.

L'invention concerne également un produit programme d'ordinateur apte à être mis en oeuvre sur un dispositif de gestion tel que décrit précédemment, comprenant des instructions de code de programme pour la mise en oeuvre d'un procédé de gestion de mise en veille d'un terminal lecteur de flux multimédia selon l'invention et tel que décrit ci-avant, lorsqu'il est exécuté par un processeur.

L'invention vise également un support de données sur lequel a été mémorisée au moins une série d'instructions de code de programme pour l'exécution d'un procédé de gestion de mise en veille d'un terminal lecteur de flux multimédia selon l'invention tel que décrit ci-dessus.

Un tel support peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support peut être un circuit intégré dans lequel le programme est incorporé, le circuit étant adapté pour exécuter ou pour être utilisé dans l'exécution du procédé de contrôle d'affichage précité.

Le dispositif de gestion de mise en veille d'un terminal lecteur de flux multimédia, le terminal lecteur de flux multimédia, le programme d'ordinateur et le support de données correspondants précités présentent au moins les mêmes avantages que ceux conférés par le procédé de mise en veille d'un terminal lecteur de flux multimédia selon la présente invention.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig. 1] : la **figure 1** représente une architecture d'un environnement domestique comprenant, dans un réseau de communication local, différents terminaux aptes à accéder à des contenus multimédia par communication avec un réseau étendu ;
[Fig. 2] : la **figure 2** illustre de façon schématique le procédé de gestion de mise en veille d'un terminal lecteur de flux multimédia de l'invention, selon un mode de réalisation ;
[Fig. 3] : la **figure 3** représente de façon schématique la structure matérielle d'un terminal lecteur de flux multimédia intégrant un dispositif de gestion de mise en veille apte à mettre en oeuvre le procédé de la **figure 2****.**

### Description détaillée de modes de réalisation de l'invention

Le principe général de l'invention repose sur la détection de l'état du lien qui relie un terminal lecteur de flux multimédia à un terminal de restitution de contenu multimédia au niveau d'une liaison de communication, par exemple une liaison HDMI, afin de déterminer si la mise en veille du terminal lecteur de flux multimédia peut être enclenchée. Cette détection permet ainsi de réduire considérablement la durée d'activation de la mise en veille automatique d'un tel terminal, puisque ce dernier est effectivement mis en veille dès lors qu'il a été détecté que l'état du lien qui le relie au terminal de restitution est inactif. Cette réduction du temps de mise en veille permet d'optimiser la consommation des ressources réseau et énergétiques, tant pour l'opérateur du réseau de communication étendu que pour le réseau de communication local. En effet, le procédé de l'invention permet de couper le flux multimédia plus rapidement par rapport aux modes de mise en veille automatique de l'art antérieur, lesquels proposent cette mise en veille au bout d'un temps beaucoup plus long, généralement d'environ quatre heures. Ces procédés connus n'empêchent donc pas la consommation de contenu multimédia dès l'instant où le terminal de restitution, tel qu'un téléviseur, est éteint. Ce procédé de mise en veille innovant présente également un impact positif sur l'environnement.

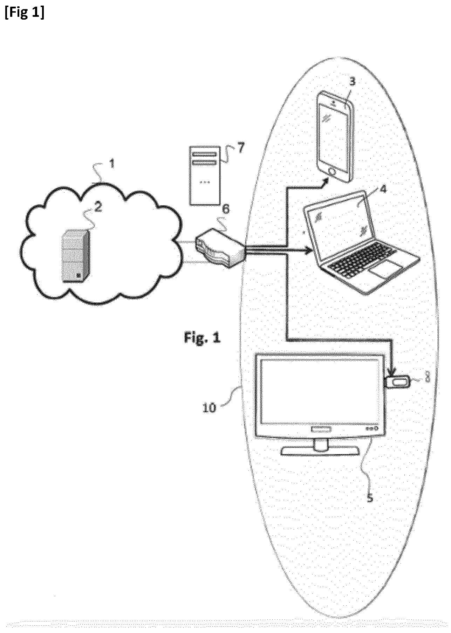

On présente désormais, en relation avec la **figure 1****,** une architecture d'un environnement domestique comprenant, dans un réseau de communication local, différents terminaux aptes à accéder à des contenus multimédia par communication avec un réseau étendu.

Le terminal 3, par exemple un téléphone intelligent de type « smartphone », le terminal 4, par exemple un ordinateur portable, et le terminal 8, par exemple une clef HDMI ou un décodeur (non représenté) connecté à un téléviseur 5, se trouvent dans cet exemple situés dans un réseau local (LAN, 10) piloté par une passerelle domestique 6. Le contexte du réseau local est donné à titre d'exemple et pourrait être transposé aisément à un réseau Internet de type « best effort », un réseau d'entreprise, etc.

Un serveur de contenus numériques 2 se trouve selon cet exemple dans le réseau étendu (WAN, 1) mais il pourrait indifféremment être situé dans le réseau local (LAN, 10), par exemple dans la passerelle domestique 6 ou tout autre équipement capable d'héberger un tel serveur de contenus. Le serveur de contenus 2 reçoit par exemple des chaînes de contenus de télévision numérique en provenance d'un réseau de télévision diffusée, non représenté, et/ou des vidéos à la demande, et les met à disposition des terminaux clients.

Les terminaux clients 3, 4 et 8 peuvent entrer en communication avec le serveur de contenus 2 pour recevoir un ou plusieurs contenus (films, documentaires, séquences publicitaires, etc.), possiblement protégés par des droits d'auteur. En général, un terminal émet une requête à destination d'un serveur, en indiquant le contenu choisi et il reçoit en retour un flux de données numériques relatives à ce contenu. Dans le cadre d'un réseau de communication local, une telle requête transite par la passerelle d'accès au réseau, par exemple la passerelle résidentielle. Plus généralement, une telle requête transite par le point d'accès 6 au réseau étendu 1. Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée.

Il est fréquent, dans ce contexte client-serveur, de recourir, pour échanger les données entre les terminaux client 3, 4 et 8 et le serveur 2, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client 3, 4 et 8 et la passerelle de services 6, ou entre cette dernière et le serveur de contenus 2.

D'autres techniques d'échange de données peuvent également être utilisées.

La passerelle de service 6 est dans cet exemple une passerelle domestique qui assure le routage des données entre le réseau étendu 1 et le réseau local 10, gère les contenus numériques en assurant notamment leur réception en provenance du réseau et leur décodage grâce aux décodeurs que l'on suppose ici intégrés à la passerelle 6 ou aux terminaux clients 3, 4 et 8. En variante, les décodeurs peuvent se trouver ailleurs dans le réseau étendu 1 ou local 10, notamment au niveau d'un élément de type STB (de l'anglais Set-Top-Box) (non représenté) associé à un téléviseur.

On suppose ici que la clef HDMI 8 ou le décodeur TV est connecté(e) au téléviseur 5 par branchement sur le port HDMI de ce dernier, et est utilisé(e) pour restituer, sur l'écran du téléviseur 5, un contenu, qui peut être un programme télévisuel diffusé en direct ou en différé, ou une vidéo à la demande, ou tout autre contenu multimédia, et possiblement protégé par des droits d'auteur, Par la suite, on désigne ce contenu sous le nom de contenu C1.

Dans cet exemple, la clef HDMI 8 ou le décodeur est connecté(e) en WiFi^{®} directement à la passerelle résidentielle 6. En variante, ces appareils pourraient également être connectés en WiFi^{®} à un autre périphérique nomade du réseau domestique, par exemple à l'ordinateur portable 4 ou au téléphone intelligent 3, par l'intermédiaire duquel ils pourraient accéder au réseau de communication étendu 1.

Dans le cas spécifique de la clef HDMI 8, celle-ci peut également être pilotée par l'utilisateur au moyen du téléphone intelligent 3, sur lequel est installée une application logicielle de commande de la clef HDMI 8.

Les fragments de contenu obtenus par la passerelle résidentielle 6 sont par exemple transmis en WiFi^{®} à la clef HDMI 8 ou au décodeur TV, qui pilote leur affichage sur l'écran du téléviseur 5, pour restitution à l'utilisateur. Dans le cas où ce contenu est protégé par des droits d'auteurs, une session de protection de contenu multimédia, autrement nommée session HDCP, peut être négociée entre la clef HDMI 8/le décodeur TV et le téléviseur 5, et établie au niveau du lien HDMI reliant ces terminaux. Dans un tel cas, cette session est indispensable pour que la transmission du flux de données multimédia s'opère entre la clef HDMI/le décodeur TV et le téléviseur, et que le téléviseur affiche le contenu correspondant.

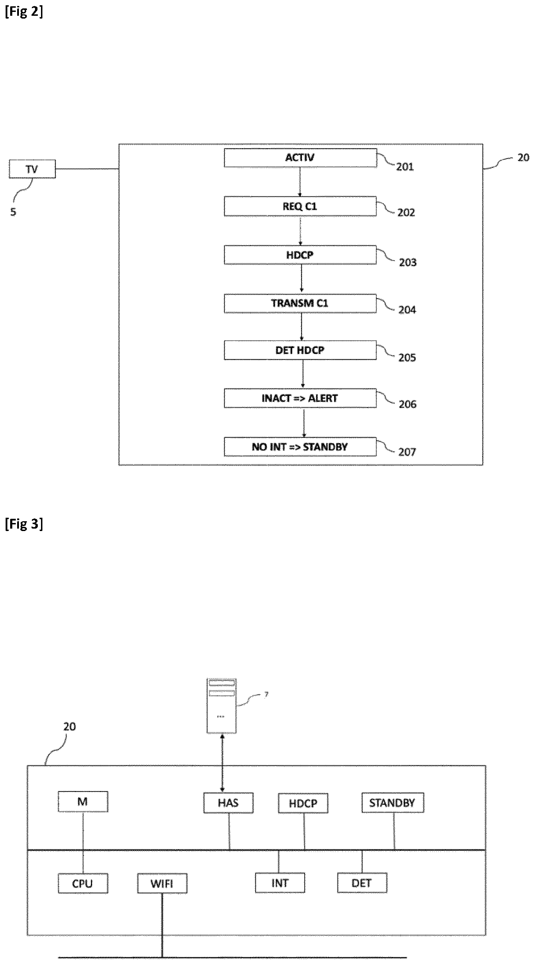

On présente désormais, en relation avec la **figure 2****,** un exemple de mise en veille optimisée d'un terminal lecteur de flux multimédia 20, tel qu'une clef HDMI 8 ou un décodeur TV présentés en **figure 1****.**

Le terminal lecteur de flux multimédia 20 est connecté à un téléviseur TV 5 par l'intermédiaire d'une liaison de communication, par exemple une liaison HDMI, et notamment un câble HDMI.

Dans une première étape référencée 201, le terminal 20 s'active, grâce à l'interaction d'un utilisateur avec un module d'interface du terminal, en appuyant par exemple sur un bouton d'initialisation d'une télécommande associée au terminal, ou en interagissant avec un terminal de commande, tel qu'un smartphone ou une tablette, pilotant ce terminal 20. Le terminal 20 est activé généralement en même temps que la mise en route du téléviseur 5, dans le but de visualiser un contenu multimédia sur l'écran de ce téléviseur.

C'est donc dans une étape suivante référencée 202 que, toujours par le biais d'une interaction de l'utilisateur avec le module d'interface du terminal, cet utilisateur opère une requête dans le but d'accéder à un contenu C1, en vue de l'afficher sur l'écran du téléviseur 5. Dans ce mode de réalisation spécifique, ce contenu C1 est protégé par des droits d'auteur. Mais l'invention peut également être mise en oeuvre pour des contenus multimédia non protégés par de tels droits d'auteur.

Ainsi, pour être en mesure de transmettre le contenu protégé C1 au téléviseur, le terminal lecteur de flux multimédia 20 doit négocier une session de protection de contenu (par exemple une session HDCP) avec le téléviseur, dans une étape suivante référencée 203. Une telle session HDCP est établie au niveau du canal HDMI qui relie ces deux terminaux, en coopération avec ces deux terminaux.

Dans une étape suivante référencée 204, le contenu C1 est transmis du terminal 20 au téléviseur 5, et s'affiche sur l'écran de ce dernier.

On notera que les étapes référencées 201 à 204 décrivent le contexte général dans lequel s'inscrit la présente invention, dans ses différents modes de réalisation, mais ne sont pas des étapes à proprement parler du procédé de gestion de mise en veille selon l'invention, dont elles précédent la mise en oeuvre.

Dès lors que le terminal 20 est actif, il implémente en continu une détection de l'état de la session HDCP qui le relie au téléviseur 5 (étape référencée 205). Pour cela, il opère des interrogations successives de l'état de cette session HDCP, par exemple trois interrogations successives. Ce nombre d'interrogations successives peut cependant être plus faible, par exemple deux interrogations successives, ou bien plus élevé, par exemple quatre ou cinq interrogations successives. Il est, dans tous les cas, nécessaire d'opérer au minimum deux interrogations successives de l'état de cette session HDCP, afin de s'assurer avec fiabilité de son état effectif. Ces interrogations sont espacées dans notre exemple d'une première période de durée déterminée, valant quelques minutes tout au plus, par exemple deux minutes, trois minutes, quatre minutes ou cinq minutes. Cette durée a été déterminée afin de pouvoir détecter plus rapidement l'inactivité de la session HDCP établie entre les deux terminaux. Cela permet ainsi d'être plus réactif pour couper le flux multimédia afin de préserver les ressources du réseau et de l'énergie. Cela permet aussi de garantir une fiabilité quant à la détection d'inactivité, évitant une mise en veille inopinée du terminal 20, qui serait liée à une mauvaise détermination de l'état de la session HDCP entre le terminal et le téléviseur 5.

Dans le cas où le contenu C1 n'est pas protégé par des droits d'auteur, l'établissement de cette session HDCP n'est pas nécessaire entre le terminal 20 et le téléviseur 5. La détection de l'état du lien entre ces deux terminaux est donc liée à l'état de leur lien direct, par exemple l'état de connexion du câble HDMI les reliant. Ainsi, si ce câble est débranché, le terminal 20, à l'issue des interrogations successives qu'il opère en continu, détectera que le lien qui le relie au téléviseur 5 est inactif.

Dans une étape suivante référencée 206, lorsqu'à l'issue des au moins deux interrogations successives mises en oeuvre par le terminal 20, celui-ci détecte que l'état de la session HDCP qui le relie au téléviseur 5 correspond à un état inactif, le terminal envoie une commande à son module d'interface, pour piloter l'affichage sur l'écran du téléviseur d'une fenêtre pop-up, dans laquelle s'affiche un message, destiné à l'utilisateur et l'informant que la coupure du flux multimédia correspondant à C1 est imminente, et que sans interaction/action de sa part pendant une deuxième période de durée déterminée, valant par exemple soixante secondes, le flux sera coupé et le terminal 20 se mettra en veille.

Si l'utilisateur réagit, par exemple en actionnant une touche de la télécommande du téléviseur 5, ou par action sur la télécommande ou le smartphone 3 pilotant le terminal 20, le module d'interface du terminal reçoit l'information correspondante, et le téléchargement du contenu multimédia C1 continu de s'opérer. C1 s'affiche donc sur l'écran du téléviseur 5.

Si en revanche l'utilisateur ne se manifeste pas pendant la deuxième période de durée déterminée consécutive à la commande d'affichage de la fenêtre pop-up sur l'écran du téléviseur 5 (étape référencée 207), le téléchargement de C1 est interrompu et le terminal 20 se met en veille. La consommation inutile des ressources réseau et énergétiques cesse alors.

Il est également à noter que lors de l'étape référencée 205, lorsque le terminal 20 détecte que l'état de la session HDCP qui le relie au téléviseur 5 correspond à un état actif, le téléchargement de C1 continue d'être opéré, et l'affichage de ce contenu sur le téléviseur n'est pas interrompu.

Ainsi, la durée de mise en veille du terminal 20 est réduite par rapport aux procédés de mise en veille automatique connus, lesquels implémentent l'affichage d'une fenêtre pop-up, et donc la détection ou non d'une interaction utilisateur avec le téléviseur 5 et/ou le terminal 20, à l'issue généralement d'une période de plusieurs heures d'inactivité, par exemple quatre heures. Au contraire, le procédé de l'invention implémente l'interrogation de l'état du lien reliant les deux terminaux de façon quasi continue, les interrogations successives mises en oeuvre par le terminal 20 étant espacées de quelques minutes seulement. La diffusion du flux multimédia est donc coupée quelques minutes seulement après qu'il ait été détecté que l'utilisateur n'était plus intéressé par la diffusion du contenu C1.

L'affichage d'une fenêtre pop-up apporte par ailleurs une sécurité supplémentaire dans ce procédé de mise en veille, car il permet à l'utilisateur de se manifester dans les cas où la détection de l'état inactif du lien entre le terminal 20 et le téléviseur 5 serait basée sur une erreur de manipulation du téléviseur et/ou du terminal de la part de l'utilisateur, ou dans les cas où celui-ci, inactif/absent pendant un certain temps, souhaiterait finalement continuer le visionnage du contenu multimédia. Ce procédé de mise en veille est donc fiable. Il présente également un impact positif sur l'environnement, au regard de la diminution, voire la suppression, de la consommation inutile des ressources réseau et énergétiques dans les réseaux locaux et étendus.

La **figure 3** présente une architecture d'un terminal lecteur de flux multimédia 20 selon un mode de réalisation de l'invention. Elle illustre ainsi seulement une manière particulière, parmi plusieurs possibles, de réaliser ce terminal, afin qu'il effectue les étapes du procédé détaillé ci-avant, en relation avec la **figure 2****.** En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Ce terminal 20, qui peut par exemple être une clef HDMI ou un décodeur TV, comprend, classiquement, des mémoires M associées à un processeur CPU. Les mémoires peuvent être de type ROM (de l'anglais « *Read Only Memory »*) ou RAM (de l'anglais *« Random Access Memory »*) ou encore Flash. Ce terminal communique avec le réseau local 10 et le réseau Internet étendu 1 via un module WIFI pour une communication locale sans fils avec la passerelle résidentielle 6 ou un autre terminal de communication du réseau local 10, par exemple le téléphone intelligent 3. Il comprend en outre un module de téléchargement de contenu, par exemple un module de téléchargement progressif adaptatif HAS apte à demander un téléchargement progressif d'un contenu.

Le terminal 20 intègre également un module INT de gestion de l'interface avec le téléviseur 5, par lequel il obtient par exemple des informations sur les éventuelles interactions de l'utilisateur avec le téléviseur 5 (action sur la télécommande du téléviseur par exemple par appui sur la touche volume ou une touche de changement de canal), et par lequel il peut piloter l'affichage sur l'écran du téléviseur 5 de fenêtres pop-up, lui permettant de délivrer des messages ou des alertes à l'utilisateur.

Pour ce mode de réalisation spécifique, il comprend également un module HDCP de négociation d'une session de protection de contenu (session HDCP) entre lui-même et le téléviseur 5, session indispensable à la transmission au téléviseur du flux multimédia comprenant des contenus protégés par droits d'auteur. Ce module permet le contrôle de l'accès aux contenus multimédia. Il n'est cependant pas requis pour tous les modes de réalisation de l'invention, et n'est notamment pas essentiel dans le cas où le contenu multimédia à transmettre n'est pas protégé par des droits d'auteur.

Le terminal 20 comprend également un module DET de détection d'un état du lien qui le relie au téléviseur 5, au niveau généralement d'une liaison HDMI, qui est par exemple un câble HDMI. Dans le cas spécifique du procédé selon le mode de réalisation décrit à la figure 2, ce module est apte à détecter l'état de la session HDCP établie entre le terminal 20 et le téléviseur 5.

Le terminal 20 comprend encore un module STANDBY de mise en veille, opérant la mise en veille du terminal lorsque le module de détection présenté ci-avant détecte que l'état de la session HDCP établie entre le terminal et le téléviseur 5 est dans un état inactif. Il peut s'agir par exemple du cas où le téléviseur s'est mis en veille automatiquement suite à une période d'inactivité, ou encore du cas où l'utilisateur a interagi avec son téléviseur pour changer de source, ou pour l'éteindre.

Le terminal 20 selon l'invention peut aussi contenir d'autres modules comme un disque dur non représenté pour le stockage des fragments vidéo, un module de traitement des commandes reçues d'une tablette ou d'un smartphone sur lesquels est installée l'application de pilotage du terminal, grâce à laquelle l'utilisateur peut en contrôler le fonctionnement, etc.

On notera que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Plus généralement, un tel terminal 20 comprend une mémoire vive (par exemple une mémoire RAM), une unité de traitement équipée par exemple d'un processeur CPU, et pilotée par un programme d'ordinateur, stocké dans une mémoire morte (par exemple une mémoire ROM ou un disque dur). A l'initialisation, les instructions de code du programme d'ordinateur sont par exemple chargées dans la mémoire vive avant d'être exécutées par le processeur CPU de l'unité de traitement. Le processeur de l'unité de traitement pilote la détection de l'état du lien qui relie le terminal 20 au téléviseur 5, et notamment l'état d'une session HDCP négociée entre ces deux terminaux, l'évaluation de la présence ou de l'absence d'interactions de l'utilisateur avec le terminal 20 ou le téléviseur 5, l'affichage de fenêtres pop-up sur l'écran du téléviseur 5, et la mise en veille du terminal 20, notamment lorsqu'il a été détecté que l'état de son lien avec le téléviseur 5 correspondait à un état inactif et que par la suite, aucune interaction utilisateur n'a été détectée suite à l'affichage d'une fenêtre pop-up sur le téléviseur 5.

## Revendications

1. Procédé de gestion de mise en veille d'un terminal lecteur de flux multimédia (8, 20), associé à un terminal de restitution de contenu multimédia (5) via une liaison de communication, **caractérisé en ce qu'**il comprend des étapes de :
- détection d'un état d'un lien entre ledit terminal lecteur de flux multimédia et ledit terminal de restitution sur ladite liaison de communication ;
- mise en veille dudit terminal lecteur de flux multimédia en cas de détection d'un état inactif dudit lien.

2. Procédé de gestion selon la revendication 1, **caractérisé en ce que** ladite détection d'un état d'un lien entre ledit terminal lecteur de flux multimédia et ledit terminal de restitution comprend au moins deux interrogations successives de l'état dudit lien par ledit terminal lecteur de flux multimédia, **et en ce qu'**un état inactif dudit lien est détecté quand ledit lien est considéré comme inactif en réponse auxdites au moins deux interrogations successives dudit terminal lecteur de flux multimédia.

3. Procédé de gestion selon la revendication 1 ou 2, **caractérisé en ce que** ledit lien est une session de protection de contenu multimédia négociée entre ledit terminal lecteur de flux multimédia et ledit terminal de restitution.

4. Procédé de gestion selon l'une quelconque des revendications précédentes, **caractérisé en ce que** la détection dudit état inactif du lien s'accompagne d'une demande de restitution d'un message d'alerte.

5. Procédé de gestion selon la revendication 4, **caractérisé en ce que,** en l'absence de réponse au message d'alerte dans une plage temporelle donnée, ledit terminal lecteur de flux multimédia se met en veille.

6. Dispositif de gestion de mise en veille d'un terminal lecteur de flux multimédia (8, 20), associé à un terminal de restitution de contenu multimédia (5) par une liaison de communication, **caractérisé en ce qu'**il comprend un module de détection (DET) d'un état d'un lien entre ledit terminal lecteur de flux multimédia et ledit terminal de restitution sur ladite liaison de communication, et un module de mise en veille (STANDBY) dudit terminal lecteur de flux multimédia.

7. Terminal lecteur de flux multimédia (8, 20), **caractérisé en ce qu'**il comprend un dispositif de gestion de mise en veille selon la revendication 6.

8. Produit programme d'ordinateur apte à être mis en oeuvre sur un dispositif de gestion tel que défini dans la revendication 6, comprenant des instructions de code de programme pour la mise en oeuvre d'un procédé de gestion de mise en veille d'un terminal lecteur de flux multimédia (8, 20) selon l'une quelconque des revendications 1 à 5, lorsqu'il est exécuté par un processeur.

9. Support de données sur lequel a été mémorisée au moins une série d'instructions de code de programme pour l'exécution d'un procédé selon l'une quelconque des revendications 1 à 5.
